# FASCICULE DE BREVET EUROPEEN

(11) **EP 0 428 453 B1**
(45) Date de publication et mention de la délivrance du brevet: **09.06.1993**
(21) Numéro de dépôt: 90420458.3
(22) Date de dépôt: 24.10.1990
(51) Int. Cl.: B25J 9/10, B25J 9/06, B25J 9/08, B25J 5/00, B25J 17/02

(54) **Robot manipulateur de grande dimension et de forte capacité pour utilisation en milieu ouvert**
Handhabungsgerät grosser Abmessungen und Kapazität zur Verwendung in offener Umgebung
Robotic manipulator of large dimensions and capacity to be used in an open environment

(30) Priorité: 27.10.1989 FR 8914613
(43) Date de publication de la demande: 22.05.1991
(73) Titulaire: POTAIN, F-69130 Ecully (FR); COMPAGNIE GENERALE DE BATIMENT ET DE CONSTRUCTION CBC, F-92800 Puteaux (FR)
(72) Inventeur: Gendrault, Michel, F-71800 La Clayette (FR); Roch, Charles André, F-92330 Sceaux (FR)
(74) Mandataire: Bratel, Gérard

(56) Documents cités:
- EP-A- 0 155 084
- EP-A- 0 159 269
- CH-A- 642 296
- DE-A- 3 627 560
- FR-A- 1 291 811
- FR-A- 2 077 630
- FR-A- 2 529 333
- FR-A- 2 549 916
- FR-A- 2 576 378
- FR-A- 2 626 807
- US-A- 3 683 747
- US-A- 4 819 496

## Description

La présente invention a pour objet un robot manipulateur de grande dimension et de forte capacité pour utilisation en milieu ouvert, c'est-à-dire à l'extérieur. Cette invention trouve notamment son application dans les diverses manutentions et opérations de chantier nécessaires à la réalisation des ouvrages du bâtiment et des travaux publics et autres activités qui peuvent leur être assimilées, où elle peut être considérée comme une évolution des engins de levage traditionnels tels que les grues.

L'application de la robotique dans le domaine de la manutention de charges lourdes, notamment des charges supérieures à une tonne, telles que rencontrées couramment sur les chantiers, reste actuellement limitée. L'utilisation de robots classiques ne permet pas de positionner avec précision une charge lourde du fait, d'une part, des déformées importantes de la structure et, d'autre part, des différences de déformées entre l'état en charge et l'état sans charge.

Dans des réalisations connues, telles que celles décrites dans le brevet français N° 2 383 758, le problème du positionnement précis des charges manutentionnées est solutionné en utilisant un ensemble de robots dans lequel chaque robot a des fonctions différentes, les fonctions desdits robots étant combinées pour assurer la tâche voulue. Ainsi, cet ensemble peut être constitué, par exemple, d'un premier robot effectuant le travail de levage et assurant la fonction de support vertical de la charge, tandis qu'un deuxième robot assure le déplacement horizontal de la charge et son guidage. Ces réalisations nécessitent une infrastructure qui limite leur application au domaine manufacturier où les tâches sont répétitives.

Pour les chantiers de construction de bâtiments et les chantiers de travaux publics, où les tâches sont évolutives en fonction de l'état d'avancement de l'ouvrage, l'utilisation de ce type d'ensemble de robots n'est pas envisageable, ceci aussi du fait des dimensions des ouvrages et de la difficulté d'installer une structure provisoire au-dessus de tels ouvrages.

La présente invention fournit une solution au positionnement automatisé précis de charges lourdes en milieu ouvert et non structuré.

A cet effet, l'invention fournit un robot manipulateur de grande dimension et de forte capacité qui comprend, en combinaison :
- un porteur motorisé, à structure élancée élastiquement déformable, constitué essentiellement d'un mât orientable autour d'un axe sensiblement vertical et d'un bras articulé au sommet du mât autour d'un axe sensiblement horizontal et réalisé en plusieurs éléments articulés les uns aux autres autour d'axes parallèles au précédent, ce bras étant dépliable et repliable dans un plan vertical passant par l'axe de rotation du mât ;
- un bras compensateur motorisé, à structure à faible inertie relativement au bras du porteur, télescopique et orientable possédant au moins un degré de liberté redondant et équipé d'un porte-préhenseur à détection d'efforts à compliance active ;
- une liaison motorisée du bras compensateur avec l'extrémité du bras du porteur ;
- des moyens de commande et de contrôle de la motorisation du porteur, du bras compensateur et de la liaison du bras compensateur avec le porteur, lesdits moyens de commande et de contrôle assurant, par l'intermédiaire de capteurs d'efforts, le contrôle des actionneurs du bras compensateur assurant la compliance active de ce bras compensateur, en fonction du couplage avec des actionneurs du porteur, en particulier pour compenser la déformation élastique du porteur ;
- des moyens d'alimentation en énergie et de contrôle/commande d'un préhenseur supporté par le porte-préhenseur.

Selon une forme de réalisation préférée de l'invention, le porteur comporte un châssis fixe ou roulant, assurant la liaison avec le sol, surmonté d'un dispositif d'orientation motorisé et d'un châssis tournant équipé d'un mât de base pouvant recevoir des éléments additionnels de mât pour former un mât rehaussable sur lequel est susceptible de se déplacer verticalement un coulisseau constitué d'une cage télescopable entourant le mât et d'un support pour un lest tournant d'équilibrage disposé sur l'arrière du porteur, ledit coulisseau portant à sa partie arrière l'axe d'articulation horizontal du bras.

Avantageusement, le bras du porteur est constitué de trois éléments, avec un bras primaire dont la partie postérieure est conformée en portique pour venir s'articuler de part et d'autre du coulisseau, un bras secondaire articulé à l'extrémité antérieure du bras primaire et un bras tertiaire articulé à l'extrémité antérieure du bras secondaire et portant à son extrémité antérieure la liaison motorisée du bras compensateur.

Selon un mode de réalisation particulier, la liaison motorisée entre le bras compensateur et l'extrémité du bras du porteur est un joint de cardan constitué d'un premier axe motorisé parallèle à l'axe d'articulation horizontal du bras du porteur permettant le débattement angulaire du bras compensateur dans un plan sensiblement vertical contenant l'axe de rotation du mât et d'un deuxième axe motorisé perpendiculaire au premier permettant le débattement angulaire du bras compensateur dans un plan sensiblement vertical perpendiculaire au précédent.

Suivant une autre caractéristique, le bras compensateur comporte un élément télescopique sensiblement vertical dont la partie supérieure fixe est liée à l'extrémité antérieure du dernier élément du bras du porteur par la liaison motorisée et dont la partie inférieure coulissante guide et retient par l'intermédiaire d'un cardan le porte-préhenseur commandé par trois vérins à double effet, disposés régulièrement en cône à 120° les uns des autres, reliant ledit porte-préhenseur à la périphérie de la partie fixe de l'élément télescopique par des joints universels ou rotules.

Suivant une caractéristique complémentaire, le porte-préhenseur équipant le bras compensateur est constitué d'un plateau supérieur recevant sur sa face supérieure les joints universels ou rotules reprenant les trois vérins à double effet et d'un plateau inférieur recevant sur sa face inférieure un dispositif d'orientation motorisé du préhenseur, lesdits plateaux étant sensiblement coaxiaux et reliés entre eux par une structure en treillis symétrique fermée sur elle-même, formée de six biellettes de longueur ajustable, avec capteur d'effort, liées aux plateaux par des joints universels ou rotules. Eventuellement, ces biellettes comportent chacune un vérin à double effet, commandé indépendamment des trois vérins à double effet précités qui commandent le porte-préhenseur.

De toute façon, l'invention sera mieux comprise à l'aide de la description qui suit, en référence au dessin schématique annexé représentant, à titre d'exemple non limitatif, une forme d'exécution de ce robot manipulateur de grande dimension et de forte capacité pour utilisation en milieu ouvert :
Figure 1 est une vue schématique en perspective axonométrique d'un robot manipulateur conforme à l'invention ;
Figure 2 représente le porteur du robot manipulateur en position entièrement repliée pour le transport ;
Figure 3 montre la configuration du robot manipulateur lors de la mise en place d'un lest tournant sur le coulisseau ;
Figure 4 montre la configuration du robot manipulateur lors de la mise en place d'un élément additionnel de mât ;
Figure 5 montre le robot manipulateur en position de travail dans sa configuration la plus basse, sans élément additionnel de mât ;
Figures 6 à 9 montrent le robot manipulateur dans différentes positions de travail pour les configurations correspondant à un, deux, trois ou quatre éléments additionnels de mât ;
Figure 10 est une vue schématique en perspective axonométrique du bras compensateur seul ;
Figure 11 est une vue en élévation du bras compensateur ;
Figure 12 est une vue latérale du bras compensateur ;
Figure 13 est un synoptique général de fonctionnement du robot manipulateur.

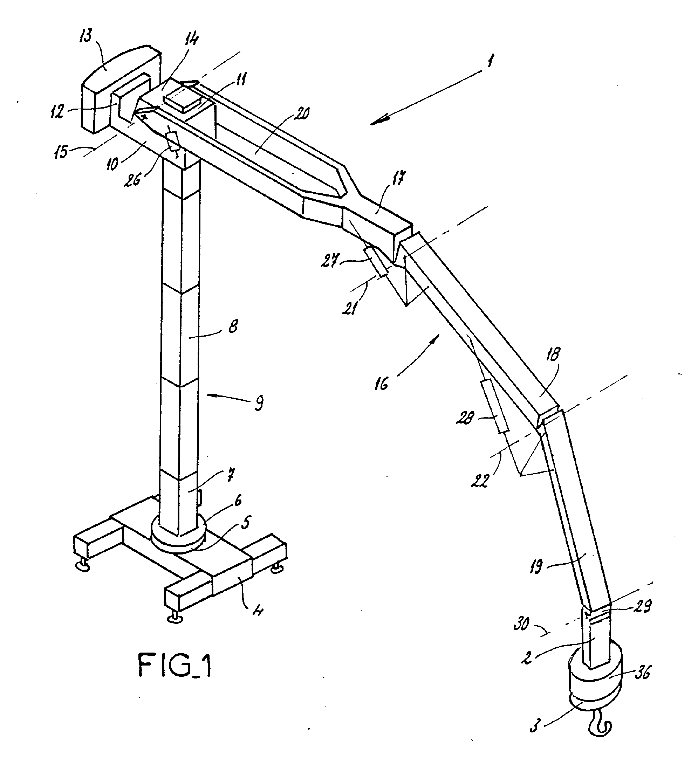

Le robot manipulateur représenté à la figure 1 comprend essentiellement un porteur motorisé 1 de grande dimension à structure élancée élastiquement déformable et un bras compensateur motorisé 2 à structure à faible inertie supportant et alimentant en énergie un préhenseur de charge ou un porte-outils 3, représenté ici comme un crochet à titre d'exemple purement illustratif.

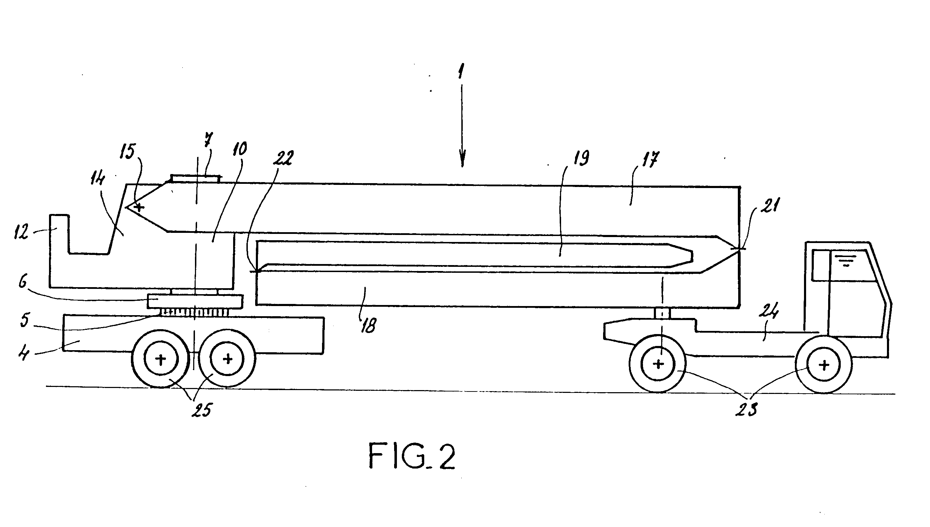

Le porteur 1 comporte un châssis fixe ou roulant 4 assurant la liaison avec le sol du chantier sur lequel le robot manipulateur est installé. Le châssis 4 est surmonté d'un dispositif d'orientation motorisé 5 supportant un châssis tournant 6 équipé d'un mât de base 7. Le mât de base 7 peut recevoir des éléments additionnels de mât 8 pour former un mât rehaussable 9 sur lequel est susceptible de se déplacer verticalement un coulisseau 10 constitué d'une cage télescopable 11 entourant le mât 9 et d'un support 12 pour un lest tournant 13 d'équilibrage disposé sur l'arrière du porteur 1. Le coulisseau 10 porte de part et d'autre de sa partie arrière 14 un axe horizontal 15 servant d'articulation à un bras 16 dépliable et repliable réalisé en trois éléments articulés les uns aux autres, désignés respectivement comme bras primaire 17, bras secondaire 18 et bras tertiaire 19. La partie postérieure 20 du bras primaire 17 est conformée en portique pour venir s'articuler symétriquement de part et d'autre du coulisseau 10 autour de l'axe horizontal 15. Les axes d'articulation respectifs 21,22 des extrémités en regard des bras primaire 17, secondaire 18 et tertiaire 19 sont parallèles à l'axe horizontal 15 et sont disposés de telle façon qu'en position de transport, montrée à la figure 2, le bras 16 est entièrement replié sur lui-même à la manière d'une spirale ; les éléments 17,18,19 qui composent le bras 16 sont alors en position sensiblement parallèle au sol, matérialisé dans une version "semi-remorque" par les roues 23 d'un véhicule tracteur 24 et par les roues 25 d'une remorque constituée à partir du châssis 4 du porteur 1 du robot manipulateur lui-même.

La motorisation du porteur 1 est assurée par une centrale de production d'énergie, un moto-réducteur d'orientation de la partie tournante, un dispositif de télescopage du coulisseau 10 le long du mât 9, non représentés, et des vérins à double effet 26,27,28 d'articulation des bras 17,18,19 qui assurent le levage et la distribution des charges, représentés schématiquement. Le ou les vérins 26 assurent le pivotement du bras primaire 17 par rapport au coulisseau 10 autour de l'axe 15. Le ou les vérins 27 assurent le pivotement du bras secondaire 18 rapport au bras primaire 17 autour de l'axe 21. Le ou les vérins 28 assurent le pivotement du bras tertiaire 19 par rapport au bras secondaire 18 au tour de l'axe 22.

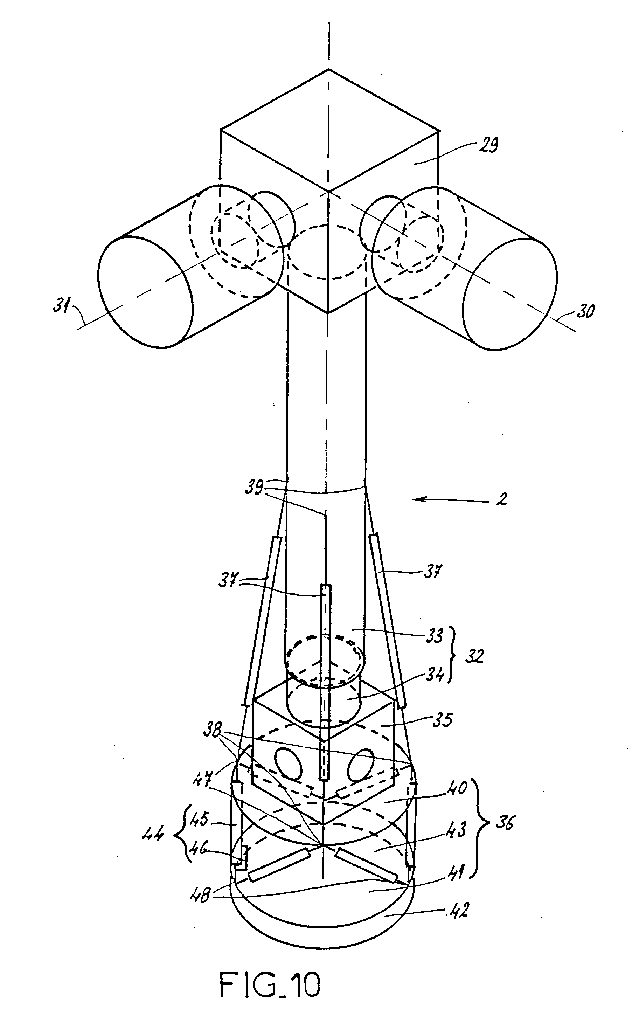

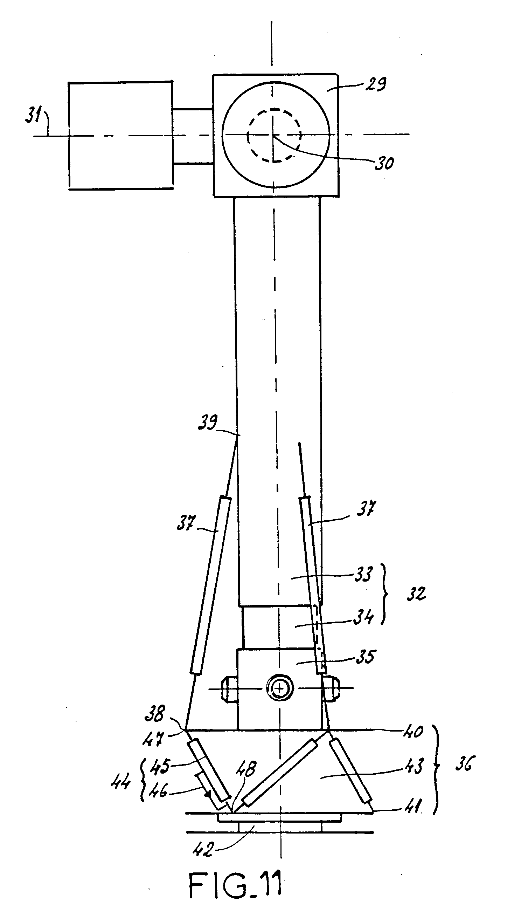

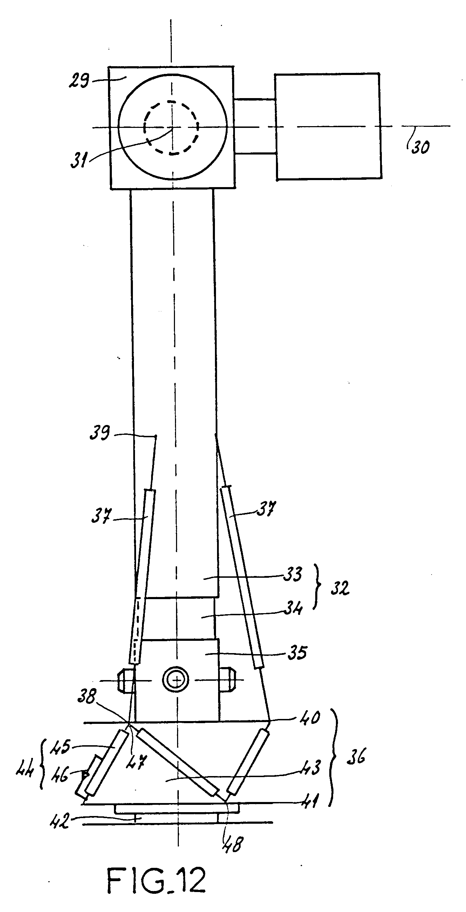

Le bras compensateur 2 représenté schématiquement aux figures 10 à 12 comporte une liaison motorisée à cardan 29 avec l'extrémité antérieure du bras tertiaire 19 du porteur 1. La liaison à cardan 29 est constituée d'un premier axe motorisé 30 parallèle à l'axe d'articulation horizontal 15 du bras 16 sur le coulisseau 10 assurant le débattement angulaire du bras compensateur 2 dans un plan sensiblement vertical contenant l'axe de rotation du mât 9, et d'un deuxième axe motorisé 31 perpendiculaire et de préférence concourant avec le premier axe motorisé 30 assurant le débattement angulaire du bras compensateur 2 dans un plan sensiblement vertical perpendiculaire au précédent. Le bras compensateur 2 comporte encore un élément télescopique 32 sensiblement vertical dont la partie supérieure 33 est reliée fixement à la liaison motorisée à cardan 29 et dont la partie inférieure coulissante 34 guide et retient par l'intermédiaire d'un cardan 35 un porte-préhenseur 36 dont le positionnement est commandé par trois vérins à double effet 37, disposés régulièrement en cône à 120° les uns des autres, qui relient le porte-préhenseur 36 à la périphérie de la partie fixe 33 de l'élément télescopique 32 par des joints universels ou rotules 38,39. Le porte-préhenseur 36 est constitué d'un plateau supérieur 40 recevant sur sa face supérieure les joints universels ou rotules 38 reprenant les trois vérins à double effet 37 et d'un plateau inférieur 41 recevant sur sa face inférieure un dispositif d'orientation motorisé 42 du préhenseur 3 ; les deux plateaux 40,41, sensiblement coaxiaux, sont reliés entre eux par une structure en treillis fermé sur elle-même 43, symétrique et formée de six biellettes 44 de longueur ajustable comportant chacune un vérin à double effet 45, avec capteur d'effort 46, commandé indépendamment des trois vérins 37, les biellettes 44 étant liées aux plateaux 40,41 par des joints universels ou rotules 47,48.

Le robot manipulateur comprend encore des moyens de commande et de contrôle de la motorisation du porteur 1 pour le suivi des trajectoires et le positionnement absolu du préhenseur ou de la charge, ainsi que de la motorisation du bras compensateur 2 pour le positionnement fin et relatif du préhenseur ou de la charge par rapport à l'objectif assigné.

Dans cette réalisation, le porteur 1 possède les trois degrés de liberté de position, tandis que le bras compensateur 2 possède, outre les trois degrés de liberté d'orientation, trois degrés de liberté de position redondants pour le positionnement fin du préhenseur ou de la charge et un dispositif porte-préhenseur 36 à détection de six composantes d'effort à compliance active pour le positionnement relatif final. Le fonctionnement du robot manipulateur selon l'invention découle de la description précédente. A partir de la localisation initiale et finale du centre de préhension de la charge dans le repère absolu du chantier pour un cycle de manutention donné, les déplacements de grande amplitude s'effectuent hors obstacle en mode automatique programmé ou par apprentissage à l'aide des actionneurs du porteur 1. Pendant les déplacements de grande amplitude le bras compensateur 2 reste en position sensiblement verticale grâce au couplage de la motorisation de la liaison à cardan 29 avec la motorisation des vérins 26,27,28 de dépliage ou repliage des bras 17,18,19. Lorsque le préhenseur ou la charge arrive à la position finale du centre de préhension dans les tolérances inhérentes au système, les actionneurs du bras compensateur 2 prennent le relais des actionneurs du porteur 1 pour assurer le positionnement fin du préhenseur ou de la charge. Lors des manoeuvres d'accostage, les actionneurs du bras compensateur 2 assurent par l'intermédiaire des capteurs d'effort 46 du porte-préhenseur 36 l'annulation des efforts horizontaux et des couples de contact jusqu'à la position dans laquelle la charge est saisie ou déposée. Lors du transfert progressif de la charge du sol au robot manipulateur ou inversement, les actionneurs du porteur 1 assurent la correction progressive de la déformée de la structure du robot manipulateur en fonction de son état de charge, tandis que simultanément les actionneurs du bras compensateur 2 assurent par l'intermédiaire des capteurs d'effort 46 du porte-préhenseur 36 la régulation à une valeur nulle des efforts horizontaux et des couples de contact.

Dans une variante de fonctionnement, la commande des actionneurs du bras compensateur 2 assure à la fois progressivement la correction de la déformée de la structure du porteur 1 en fonction de son état de charge, et la régulation à une valeur nulle des efforts horizontaux et des couples de contact.

Comme montré à la figure 2, le robot est conçu pour être tracté d'un chantier à un autre ; dans la version "semi-remorque" ici représentée, le colis principal porté par la remorque formée par le châssis 4 du robot est constitué du dispositif d'orientation motorisé 5, du châssis tournant 6 équipé du mât de base 7, du coulisseau 10 et du bras 16 entièrement replié sur lui-même. Les autres composants tels que le lest 13, les éléments additionnels de mât 8, le bras compensateur 2 et le préhenseur ou porte-outils 3 sont, dans ce cas, transportés séparément.

En arrivant sur le chantier, le robot manipulateur est positionné au lieu d'implantation prévu au moyen de bras télescopiques ou dépliables portés par le châssis 4 et munis à leurs extrémités, soit de vérins d'appui en version stationnaire, soit de galets de roulement ou boggies en version roulantes sur rails.

Le colis principal est déplié et le robot manipulateur est alors équipé du bras compensateur 2.

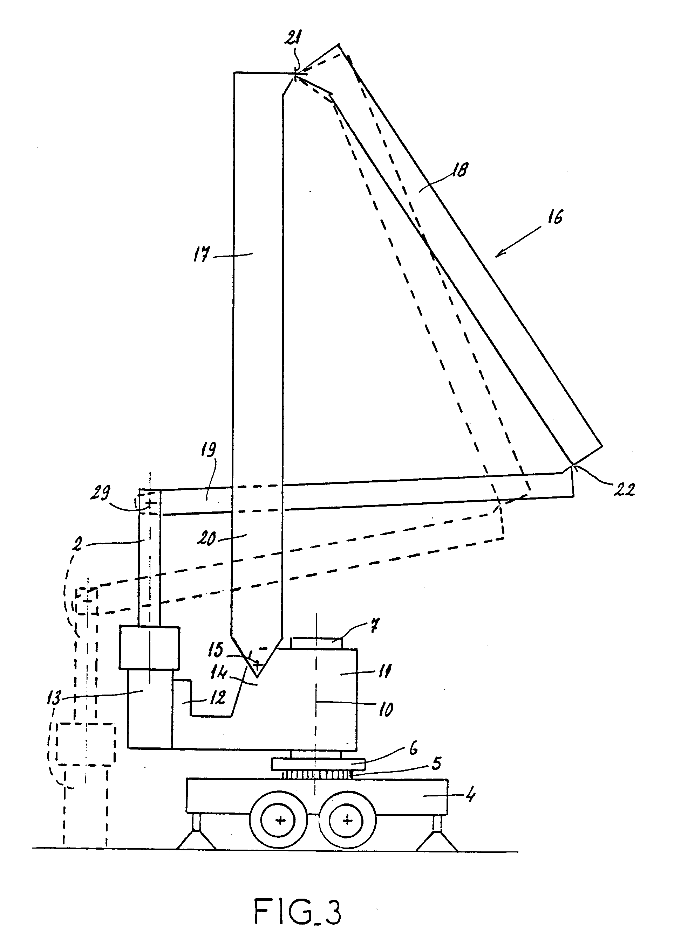

Comme montré à la figure 3, le robot est conçu pour permettre l'auto-lestage du porteur 1. Le coulisseau 10 étant monté sur le mât de base 7 du châssis tournant 6 dans sa position la plus basse et le bras primaire 17 étant relevé dans sa position extrême, par exemple sensiblement verticale, le robot va saisir le lest 13 disposé à l'arrière du porteur 1 par l'intermédiaire de son bras 16 équipé ou non du bras compensateur 2 dimensionnés de telle façon que le bras tertiaire 19, et le cas échéant le bras compensateur 2, puissent passer au travers des jambes du portique 20 que forme la partie postérieure du bras primaire 17, et le mettre en place sur le support 12 du coulisseau 10.

En fonction de l'état d'avancement du chantier, le robot manipulateur peut adopter plusieurs configurations de travail en mettant en place des éléments additionnels de mât 8.

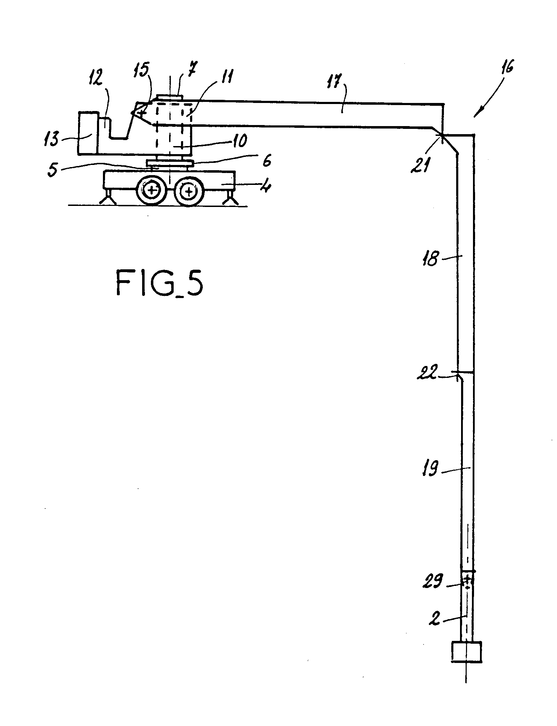

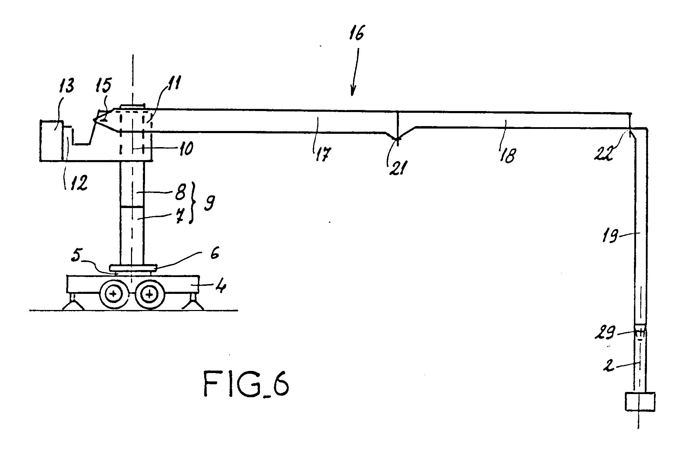

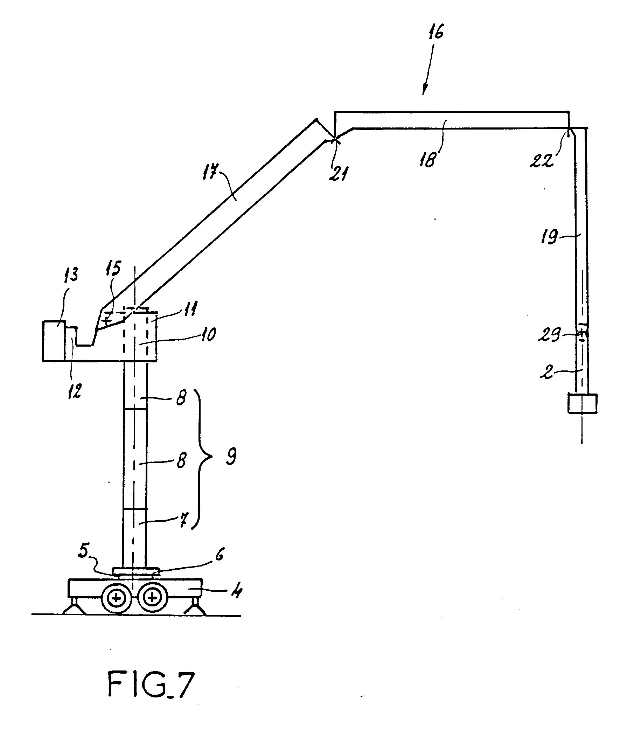

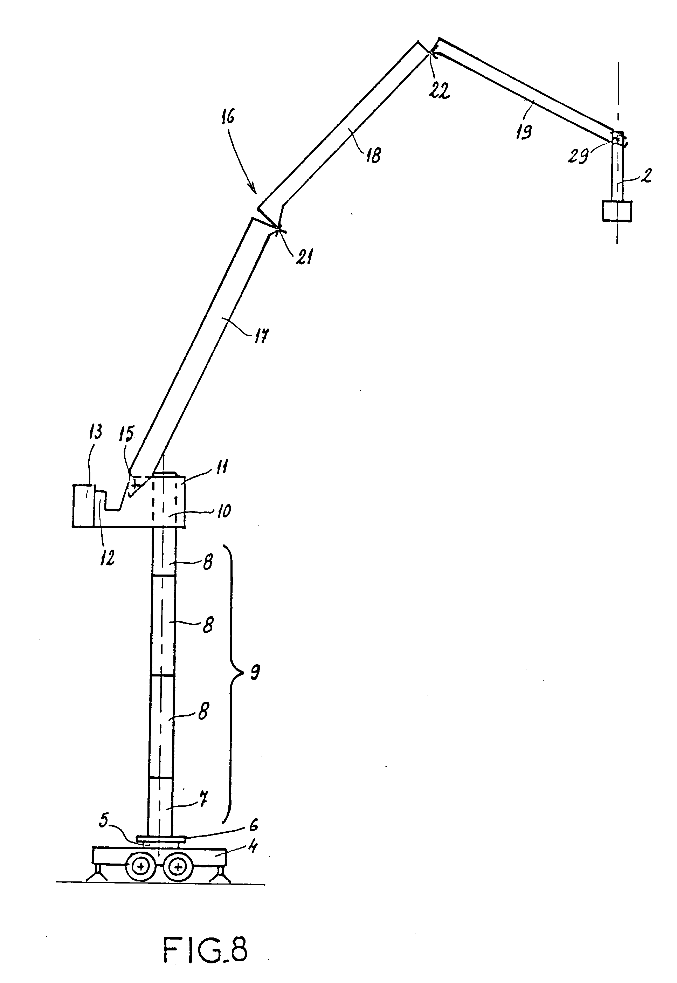

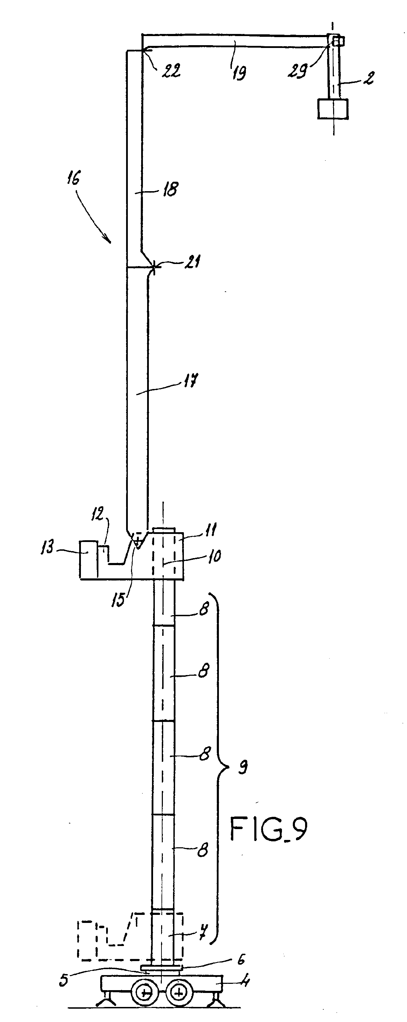

Les figures 5 à 9 montrent le robot dans différentes positions de travail pour les configurations correspondant à zéro, un, deux, trois ou quatre éléments additionnels de mât 8.

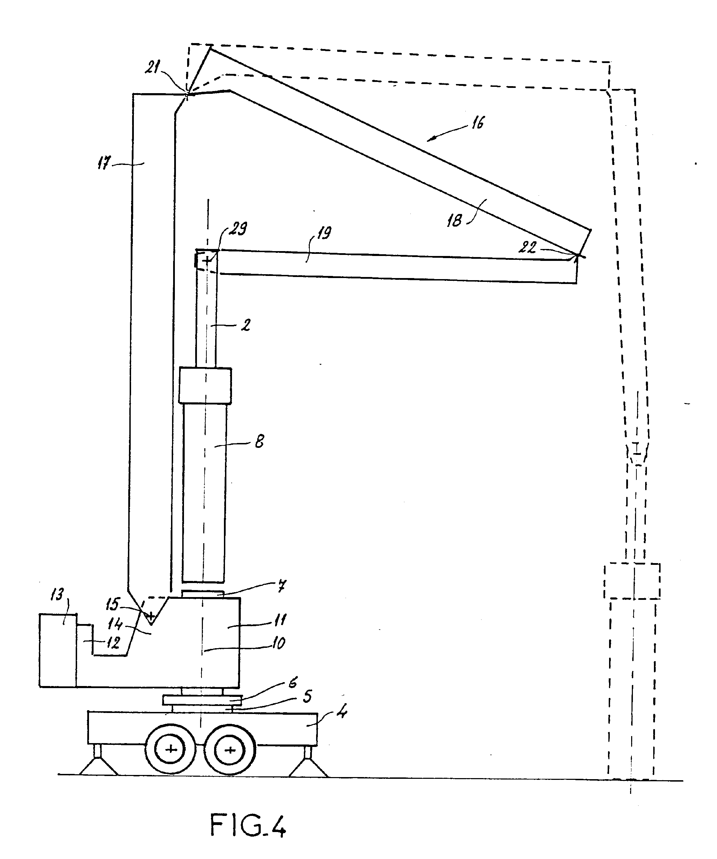

Comme montré à la figure 4, le robot manipulateur est conçu pour mettre en place lui-même ses propres éléments additionnels de mât 8. Le coulisseau 10 étant monté sur le mât de base 7 du châssis tournant 6 ou plus généralement sur le mât 9, le robot va saisir un élément additionnel de mât 8 disposé à l'avant du porteur 1 par l'intermédiaire de son bras 16 équipé ou non du bras compensateur 2, et le disposer au sommet du mât 9 déjà en place. L'axe d'articulation 15 du bras 16 sur le coulisseau 10 est positionné, avec décalage vers l'arrière par rapport à l'axe de rotation vertical du mât 9, de telle façon que la mise en place des éléments additionnels de mât 8 puisse s'effectuer lorsque le bras primaire 17 est en position sensiblement verticale.

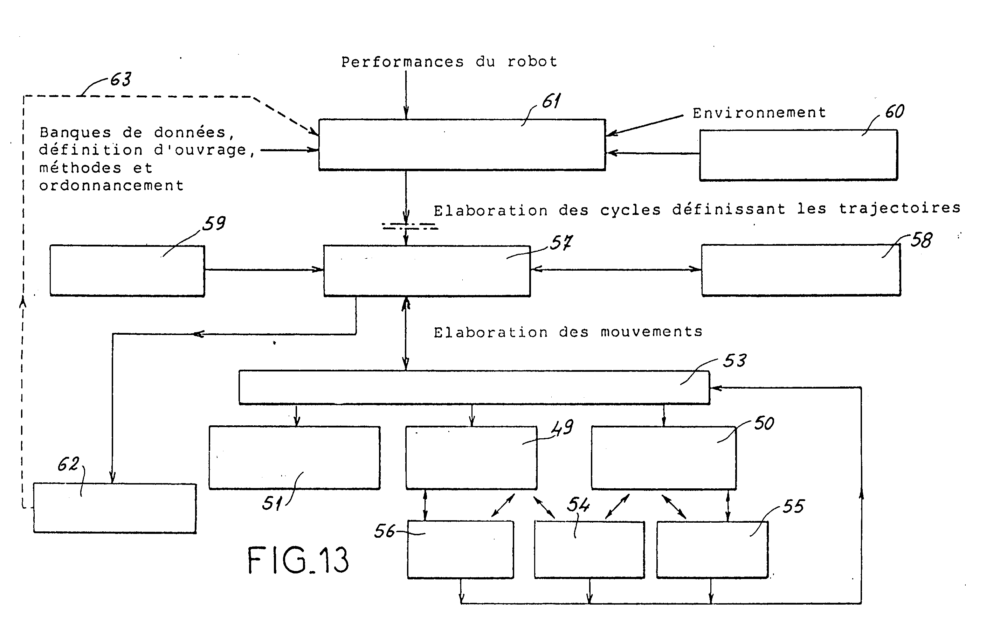

Le fonctionnement d'ensemble du robot manipulateur est illustré par le synoptique de la figure 13, dans la partie inférieure de laquelle sont indiqués, par des blocs :
- les actionneurs 49,50,51 du porteur 1, du bras compensateur 2 et du préhenseur 3 ou porte-outils (selon l'utilisation du robot) ;
- les moyens de commande/contrôle 53 des divers actionneurs ;
- les capteurs de position 54 et de vitesse 55, ainsi que les capteurs d'efforts 56, associés à ces actionneurs.

Pour son fonctionnement notamment en mode automatique, le robot manipulateur est chargé d'un logiciel 57 qui sert notamment à l'élaboration des mouvements, pour la commande de chaque actionneur. Ce logiciel 57 est en relation avec des supervisions et commandes locales 58, ainsi qu'avec des éléments de sécurité et de perception de l'environnement 59.

Le fonctionnement en mode automatique du robot manipulateur est lui-même assujetti à une programmation hors ligne 60, préparée hors site et établissant un logiciel d'exploitation 61, comme indiqué dans la partie supérieure de la figure 13.

Enfin, le robot manipulateur enregistre les caractéristiques des opérations effectuées (compte rendu d'exploitation 62), la restitution de ces informations étant indispensable à la tenue à jour des banques de données utilisées pour la programmation hors ligne préparée hors site - voir le bouclage de retour 63 indiqué en pointillés.

Comme il va de soi, l'invention ne se limite pas à la seule forme de réalisation de ce robot manipulateur de grande dimension et de forte capacité pour utilisation en milieu ouvert qui a été décrite ci-dessus, à titre d'exemple ; elle en embrasse, au contraire, toutes les variantes respectant le même principe, quels qu'en soient les détails de construction et quelles qu'en soient les applications particulières dans le domaine du bâtiment et des travaux publics et des autres activités qui peuvent leur être assimilées, ces applications n'étant pas limitées aux manipulations de charges mais comprenant aussi les travaux de démolition et de rénovation, avec utilisation d'outils appropriés.

## Revendications

1. Robot manipulateur de grande dimension et de forte capacité pour utilisation en milieu ouvert, qui comprend, en combinaison :
- un porteur motorisé (1), à structure élancée élastiquement déformable, constitué essentiellement d'un mât (9) orientable autour d'un axe sensiblement vertical et d'un bras (16) articulé au sommet du mât (9) autour d'un axe sensiblement horizontal (15) et réalisé en plusieurs éléments (17,18,19) articulés les uns aux autres autour d'axes (21,22) parallèles au précédent (15), ce bras (16) étant dépliable et repliable dans un plan vertical passant par l'axe de rotation du mât (9) ;
- un bras compensateur motorisé (2), à structure à faible inertie relativement au bras (16) du porteur (1), télescopique et orientable possédant au moins un degré de liberté redondant et équipé d'un porte-préhenseur (36) à détection d'efforts à compliance active ;
- une liaison motorisée (29) du bras compensateur (2) avec l'extrémité du bras (16) du porteur (1) ;
- des moyens de commande et de contrôle de la motorisation du porteur (1), du bras compensateur (2) et de la liaison (29) du bras compensateur (2) avec le porteur (1), lesdits moyens de commande et de contrôle assurant, par l'intermédiaire de capteurs d'efforts, le contrôle des actionneurs du bras compensateur (2) assurant la compliance active de ce bras compensateur (2), en fonction du couplage avec des actionneurs du porteur (1), en particulier pour compenser la déformation élastique du porteur (1) ;
- des moyens d'alimentation en énergie et de contrôle/commande d'un préhenseur (3) supporté par le porte-préhenseur (36).

2. Robot manipulateur selon la revendication 1, caractérisé en ce que le porteur (1) comporte un châssis fixe ou roulant (4), assurant la liaison avec le sol, surmonté d'un dispositif d'orientation motorisé (5) et d'un châssis tournant (6) équipé d'un mât de base (7) pouvant recevoir des éléments additionnels de mât (8) pour former un mât rehaussable (9) sur lequel est susceptible de se déplacer verticalement, un coulisseau (10) constitué d'une cage télescopable (11) entourant le mât (9) et d'un support (12) pour un lest tournant (13) d'équilibrage disposé sur l'arrière du porteur (1), ledit coulisseau (10) portant à sa partie arrière (14) l'axe d'articulation horizontal (15) du bras (16).

3. Robot manipulateur selon la revendication 2, caractérisé en ce que le bras (16) du porteur (1) est constitué d'un bras primaire (17) dont la partie postérieure (20) est conformée en portique pour venir s'articuler (en 15) de part et d'autre du coulisseau (10), d'un bras secondaire (18) articulé (en 21) à l'extrémité antérieure du bras primaire (17) et d'un bras tertiaire (19) articulé (en 22) à l'extrémité antérieure du bras secondaire (18), ledit bras tertiaire (19) portant à son extrémité antérieure la liaison motorisée (29) du bras compensateur (2).

4. Robot manipulateur selon l'une quelconque des revendications 1 à 3, caractérisé en ce que la liaison motorisée (29) entre le bras compensateur (2) et l'extrémité du bras (16) du porteur (1) est un joint de cardan constitué d'un premier axe motorisé (30) parallèle à l'axe d'articulation horizontal (15) du bras (16) du porteur (1) permettant le débattement angulaire du bras compensateur (2) dans un plan sensiblement vertical contenant l'axe de rotation du mât (9) et d'un deuxième axe motorisé (31) perpendiculaire au premier (30) permettant le débattement angulaire du bras compensateur (2) dans un plan sensiblement vertical perpendiculaire au précédent.

5. Robot manipulateur selon l'une quelconque des revendications 1 à 4, caractérisé en ce que le bras compensateur (2) comporte un élément télescopique (32) sensiblement vertical dont la partie supérieure fixe (33) est liée à l'extrémité antérieure du dernier élément (19) du bras (16) du porteur (1) par la liaison motorisée (29) et dont la partie inférieure coulissante (34) guide et retient par l'intermédiaire d'un cardan (35) le porte-préhenseur (36) commandé par trois vérins à double effet (37), disposés régulièrement en cône à 120° les uns des autres, reliant ledit porte-préhenseur (36) à la périphérie de la partie fixe (33) de l'élément télescopique (32) par des joints universels ou rotules (38,39).

6. Robot manipulateur selon la revendication 5, caractérisé en ce que le porte-préhenseur (36) équipant le bras compensateur (2) est constitué d'un plateau supérieur (40) recevant sur sa face supérieure les joints universels ou rotules (38) reprenant les trois vérins à double effet (37) et d'un plateau inférieur (41) recevant sur sa face inférieure un dispositif d'orientation motorisé (42) du préhenseur (3), lesdits plateaux (40,41) étant sensiblement coaxiaux et reliés entre eux par une structure en treillis (43) symétrique fermée sur elle-même, formée de six biellettes (44) de longueur ajustable, avec capteur d'effort (46), et liées aux plateaux (40,41) par des joints universels ou rotules (47,48).

7. Robot manipulateur selon la revendication 6, caractérisé en ce que les biellettes (44) comportent chacune un vérin à double effet (45), commandé indépendamment des trois vérins à double effet précités (37) qui commandent le porte-préhenseur (36).

8. Robot manipulateur selon la revendication 3, caractérisé en ce que l'articulation (15) du bras primaire (17) sur le coulisseau (10) est décalée suffisamment vers l'arrière par rapport à l'axe de rotation vertical du mât (9) pour permettre la mise en place d'éléments additionnels de mât (8) lorsque le bras primaire (17) est en position sensiblement verticale.

9. Robot manipulateur selon la revendication 3 ou 8, caractérisé en ce que le bras tertiaire (19), équipé ou non du bras compensateur (2), est susceptible de passer entre les jambes du portique constitué par la partie postérieure (20) du bras primaire (17) lorsque ledit bras primaire (17) est en position verticale pour permettre l'auto-lestage du porteur (1).

10. Robot manipulateur selon les revendications 3, 8 ou 9, caractérisé en ce que le bras (16) du porteur (1) est entièrement replié sur lui-même à la manière d'une spirale en position de transport, les éléments (17,18,19) qui composent ledit bras (16) étant alors en position sensiblement parallèle au sol, matérialisé dans une version "semi-remorque" par les roues (23) d'un véhicule tracteur (24) et les roues (25) d'une remorque constituée à partir du châssis (4) du porteur (1) du robot manipulateur lui-même.

## Patentansprüche

1. Handhabungsgerät großer Abmessung und Kapazität zur Verwendung in offener Umgebung,
**gekennzeichnet** durch die Kombination der folgenden Merkmale:
- einen motorisierten Träger (1) mit schlank aufsteigender, elastisch verformbarer Struktur, der im wesentlichen aus einem Mast (9) gebildet ist, der um eine im wesentlichen vertikale Achse schwenkbar ist, sowie aus einem Arm (16), der an die Spitze des Mastes (9) um eine im wesentlichen horizontale Achse (5) schwenkbar angelenkt ist und der aus mehreren Elementen (17,18,19) besteht, die aneinander um Achsen (21,22) angelenkt sind, die zur vorhergehenden Achse (15) parallel sind, wobei der Arm (16) in einer vertikalen Ebene, die durch die Drehachse des Mastes (9) geht, auffaltbar und zusammenfaltbar ist,
- einen motorisierten Kompensationsarm (2), dessen Trägheit, verglichen mit derjenigen des Armes (16) des Trägers (1) relativ gering ist, der teleskopierbar und ausrichtbar ist, der einen redundanten Freiheitsgrad hat und der einen Traggreifer (36) zum Nachweis aktiver Belastungen hat,
- eine motorisierte Verbindung (29) des Kompensationsarms (2) mit dem Ende des Arms (16) des Trägers (1),
- Mittel zum Steuern und für die Kontrolle der Motorisierung des Trägers (1) des Kompensationsarms (2) und der Verbindung (29) des Kompensationsarms (2) mit dem Träger (1), wobei diese Mittel zum Steuern und für die Kontrolle mit Hilfe von Belastungsaufnehmern die Kontrolle der Betätiger des Kompensationsarms (2) sicherstellen, wobei die aktive Übereinstimmung des Kompensationsarms (2) in Abhängigkeit von der Kopplung an Betätiger des Trägers (1) sichergestellt wird, insbesondere um die elastische Verformung des Trägers (1) zu kompesieren,
- Mittel zur Energieversorgung und für die Steuerung/Kontrolle eines Greifers (3), der vom Traggreifer (36) getragen ist.

2. Handhabungsgerät nach Anspruch 1,
**dadurch gekennzeichnet,**
daß der Träger (1) ein festes oder verfahrbares Chassis (4) aufweist, das die Verbindung mit dem Boden herstellt, über dem sich eine motorisierte Ausrichteinheit (5) und ein Drehchassis (6) befinden, das mit einem Basismast (7) versehen ist, der zusätzliche Bauelemente des Mastes (8) aufnehmen kann, um einen aufrichtbaren Mast (9) auszubilden, an dem in vertikaler Richtung ein Kulissenstein (10) verschiebbar ist, der aus einem teleskopierbaren Käfig (11) gebildet wird, der den Mast (9) umgibt, und aus einer Stütze (12) für einen drehbaren Ballast (13) zum Gewichtsausgleich, der an der Rückseite des Trägers (1) vorgesehen ist, wobei der Kulissenstein (10) an seinem vorderen Teil (14) die horizontale Schwenkachse (15) des Armes (16) trägt.

3. Handhabungsgerät nach Anspruch 2,
**dadurch gekennzeichnet,**
daß der Arm (16) des Trägers (1) aus einem ersten Arm (17) besteht, dessen rückwärtiger Teil (20) torförmig ausgebildet ist, um beidseits (bei Pos. 15) auf den Kulissenstein (10) gefaltet zu werden, ferner aus einem zweiten Arm (18), der (bei Pos. 21) an das vordere Ende des ersten Arms (17) angelenkt ist, und aus einem dritten Arm (19), der (bei Pos. 22) an das vordere Ende des zweiten Arms (18) angelenkt ist, wobei der dritte Arm (19) an seinem vorderen Ende die motorisierte Verbindung (29) des Kompensationsarms (2) trägt.

4. Handhabungsgerät nach einem der Ansprüche 1 bis 3,
**dadurch gekennzeichnet,**
daß die motorisierte Verbindung zwischen dem Kompensationsarm (2) und dem Ende des Armes (16) des Trägers (1) als Kardanverbindung ausgebildet ist, die von einer ersten, motorisierten Achse (30) ausgebildet wird, die sich parallel zur horizontalen Schwenkachse (15) des Armes (16) des Trägers (1) erstreckt, wodurch eine winkelige Bewegung des Kompensationsarms (2) in einer Ebene ermöglicht wird, die sich im wesentlichen vertikal erstreckt und die die Drehachse des Mastes (9) enthält, und aus einer zweiten motorisierten Achse (31), die sich senkrecht zur ersten Achse (30) erstreckt und die eine winkelige Bewegung des Kompensationsarms (2) in einer Ebene ermöglicht, die sich im wesentlichen senkrecht zur vorhergehenden Ebene erstreckt.

5. Handhabungsgerät nach einem der Ansprüche 1 bis 4,
**dadurch gekennzeichnet**,
daß der Kompensationsarm (2) ein Teleskopelement (32) aufweist, das im wesentlichen vertikal ausgerichtet ist und dessen fester oberer Teil (33) mit dem vorderen Ende des letzten Elements (19) des Arms (16) des Trägers (1) über die motorisierte Verbindung (29) verbunden ist, und dessen unterer, gleitender Teil (34) mit Hilfe des Kardangelenks (35) den Traggreifer (36) führt und hält, der von drei doppelt wirkenden Kolben-Zylinder-Einheiten (37) gesteuert wird, die mit einem Konus von 120° untereinander gleichmäßig verteilt sind und die den Traggreifer (36) mit dem Umfang des festen Teils (33) des Teleskopelements (32) über Universalgelenke oder Gelenklager (38,39) verbinden.

6. Handhabungsgerät nach Anspruch 5,
**dadurch gekennzeichnet**,
daß der Traggreifer 36 des Kompensationsarms (2) aus einer oberen Plattform (40) besteht, die an ihrer Oberseite Universalgelenke oder Gelenklager (38) aufnimmt, mit denen die drei doppelt wirkenden Kolben-Zylinder-Einheiten (37) verbunden sind, sowie eine untere Plattform (41), die an ihrer Unterseite eine motorisierte Ausrichteinheit (42) des Greifers (3) aufnimmt, wobei die Plattformen (40, 41) im wesentlichen koaxial angeordnet sind und miteinander über eine Gitterstruktur (43) verbunden sind, die symmetrisch und geschlossen ist und die aus sechs Schwenkarmen (44) einstellbarer Länge gebildet wird, mit einem Lastaufnehmer (46), und die mit den Plattformen (40,41) über Universalgelenke oder Gelenklager (47,48) verbunden ist.

7. Handhabungsgerät nach Anspruch 6,
**dadurch gekennzeichnet,**
daß die Schwenkarme (44) jeweils eine doppelt wirkende Kolben-Zylinder-Einheit (45) aufweist, die unabhängig von den drei vorher erwähnten doppelt wirkenden Kolben-Zylinder-Einheiten (37) gesteuert werden, die den Traggreifer (16) steuern.

8. Handhabungsgerät nach Anspruch 3,
**dadurch gekennzeichnet,**
daß die Anlenkung (15) des ersten Arms (17) am Kulissenstein (10) ausreichend nach hinten versetzt ist, bezogen auf die vertikale Drehachse des Mastes (9), um zu ermöglichen, daß zusätzliche Bauelemente des Mastes ( 8) angebracht werden, wenn der erste Arm (17) sich in der im wesentlichen vertikalen Position befindet.

9. Handhabungsgerät nach Anspruch 3 oder 8,
**dadurch gekennzeichnet,**
daß der dritte Arm (19), der den Kompensationsarm (2) aufweist oder auch nicht, zwischen den Schenkeln des Tores passieren kann, das vom rückwärtigen Teil (20) des ersten Arms (17) gebildet wird, wenn der erste Arm (17) sich in der vertikalen Lage befindet, damit der Träger (1) selbst Ballast aufnehmen kann.

10. Handhabungsgerät nach den Ansprüchen 3, 8 oder 9,
**dadurch gekennzeichnet,**
daß der Arm (16) des Trägers (1) in der Transportlage vollständig auf sich nach Art einer Spirale gefaltet ist, wobei die Elemente (17,18,19), die den Arm (16) ausbilden, sich jetzt in einer im wesentlichen zum Boden parallelen Lage befinden, wodurch eine Ausbildung nach Art eines halben Anhängers mit Hilfe von Rädern (23) eines Zugfahrzeugs (24) und mit Hilfe der Räder (25) eines Anhängers gebildet wird, der zum Teil vom Chassis (4) des Trägers (1) des eigentlichen Handhabungsgeräts gebildet ist.

## Claims

1. Manipulating robot of large size and high capacity, for use in an open environment, comprising, in combination:
- a motorised carrier (1), with an elastically deformable slender structure, consisting essentially of a mast (9) orientable about a substantially vertical axis and an arm (16) articulated at the top of the mast (9) about a substantially horizontal axis (15) and designed so as to have several members (17, 18, 19) articulated on one another about axes (21, 22) parallel to the previous one (15), this arm (16) being capable of being straightened and bent in a vertical plane passing through the axis of rotation of the mast (9);
- a motorised compensator arm (2), with a structure with low inertia compared with the arm (16) of the carrier (1), telescopic and orientable, having at least one redundant degree of freedom and equipped with a gripper carrier (36) with active compliance force detection;
- a motorised link (29) connecting the compensator arm (2) to the end of the arm (16) of the carrier (1);
- means for controlling and monitoring the motorisation of the carrier (1), of the compensator arm (2) and of the link (29) between the compensator arm (2) and the carrier (1), the said means of control and monitoring providing, by means of force sensors, control of the actuators of this compensator arm (2) providing the active compliance of this compensator arm (2), as a function of the coupling with the actuators of the carrier (1), in particular in order to compensate for the elastic deformation of the carrier (1);
- means for supplying power to and monitoring and controlling a gripper (3) supported by the gripper carrier (36).

2. Manipulating robot according to Claim 1, characterised in that the carrier (1) has a fixed or travelling chassis (4), providing connection to the ground, surmounted by a motorised orientation device (5) and a rotating chassis (6) equipped with a base mast (7) able to receive additional mast members (8) to form a raisable mast (9) on which is able to move vertically a slide (10) consisting of a telescopic cage (11) surrounding the mast (9) and a support (12) for a rotating balancing ballast (13) disposed on the rear of the carrier (1), the said slide (10) carrying, at its rear part (14), the horizontal articulation axis (15) of the arm (16).

3. Manipulating robot according to Claim 2, characterised in that the arm (16) of the carrier (1) consists of a primary arm (17), the rear part (20) of which is shaped like a gantry in order to articulate (at 15) on each side of the slide (10), a secondary arm (18) articulated (at 21) at the front end of the primary arm (17) and a tertiary arm (19) articulated (at 22) at the front end of the secondary arm (18), the said tertiary arm (19) carrying at its front end the motorised link (29) for the compensator arm (2).

4. Manipulating robot according to any one of Claims 1 to 3, characterised in that the motorised link (29) between the compensator arm (2) and the end of the arm (16) of the carrier (1) is a universal joint consisting of a first motorised shaft (30) parallel to the horizontal axis of articulation (15) of the arm (16) of the carrier (1) allowing an angular movement of the compensator arm (2) in a substantially vertical plane containing the axis of rotation of the mast (9), and a second motorised shaft (31) at right angles to the first one (30) allowing an angular movement of the compensator arm (2) in a substantially vertical plane at right angles to the previous one.

5. Manipulating robot according to any one of Claims 1 to 4, characterised in that the compensator arm (2) has a substantially vertical telescopic member (32), the fixed top part (33) of which is connected to the front end of the last member (19) on the arm (16) of the carrier (1) by means of the motorised link (29), and the sliding bottom part (34) of which guides and holds, by means of a universal joint (35), the gripper carrier (36) controlled by three double-action jacks (37), disposed regularly in a cone at 120° from each other, connecting the said gripper carrier (36) to the periphery of the fixed part (33) of the telescopic member (32) by means of universal joints or pivots (38, 39).

6. Manipulating robot according to Claim 5, characterised in that the gripper carrier (36) fitted to the compensator arm (2) consists of a top plate (40) receiving, on its top face, the universal joints or pivots (38) taking the three double-action jacks (37) and a bottom plate (41) receiving, on its bottom face, a motorised orientation device (42) for the gripper (3), the said plates (40, 41) being substantially coaxial and connected to each other by a symmetrical lattice structure (43) closed on itself, formed by six linkages (44) of adjustable length, with a force sensor (46), and connected to the plates (40, 41) by universal joints or pivots (47, 48).

7. Manipulating robot according to Claim 6, characterised in that the linkages (44) each have a double-action jack (45), controlled independently of the three aforesaid double-action jacks (37) which control the gripper carrier (36).

8. Manipulating robot according to Claim 3, characterised in that the articulation (15) of the primary arm (17) on the slide (10) is offset sufficiently towards the rear with respect to the axis of rotation of the mast (9) to allow the fitting of additional mast members (8) when the primary arm (17) is in a substantially vertical position.

9. Manipulating robot according to Claim 3 or 8, characterised in that the tertiary arm (19), whether or not fitted with the compensator arm (2), is capable of passing between the beams of the gantry formed by the rear part (20) of the primary arm (17) when the said primary arm (17) is in a vertical position, to allow automatic ballasting of the carrier (1).

10. Manipulating robot according to Claims 3, 8 or 9, characterised in that the arm (16) of the carrier (1) is completely bent back on itself like a spiral in the transport position, the members (17, 18, 19) making up the said arms (16) then being in a position substantially parallel to the ground, turned into a "semi-trailer" version by means of the wheels (23) of a tractor (24) and the wheels (25) of a trailer formed from the chassis (4) of the carrier (1) of the manipulating robot itself.
